# EUROPEAN PATENT APPLICATION

(11) **EP 1 310 174 A1**
(43) Date of publication of application: **14.05.2003**
(21) Application number: 02024979.3
(22) Date of filing: 07.11.2002
(51) Int. Cl.: A23L 1/305, A23L 1/237, A23L 1/227, A23L 1/22

(54) **Taste-improving agent**

(30) Priority: 07.11.2001 JP 2001377893
(71) Applicant: Hikari Seika Co., Ltd., Hikari-shi, Yamaguchi-ken (JP)
(72) Inventor: Okai, Hideo, Higashi-Hroshima shi, Hiroshima-ken (JP)
(74) Representative: VOSSIUS & PARTNER

(57) **Abstract**

The present invention provides taste improving agents which are tasteless in themselves for improving tastes of various foodstuffs and pharmaceuticals by increasing saltiness, sweetness, Umami-good taste, etc., and decreasing undesirable bitterness or sourness, thereby contributing to prevention of health disorders caused by excessive salt or sugar intakes. By reacting basic amino acids particularly alginine, lysine or orinithine with citric acid, and using the taste controlling action of the neutral salts formed, the taste of various foodstuffs and pharmaceuticals are improved.

## Description

The present invention concerns taste-improving agents characterized in that while being tasteless in themselves, they promote pleasant tastes of foodstuff or pharmaceuticals such as sweetness, saltiness, and Umami or monosodium glutamate-like taste, and decreases unpleasant tastes such as bitterness and sourness, to thereby improve the taste of substances. More concretely, it concerns the taste-improving agents mainly consisting of neutral salts formed by reacting basic amino acids such as arginine, lysine and ornithine, and citric acid.

The following methods are usually used to improve the taste of foodstuffs including processed foods. If saltiness is to be increased or decreased, the amount of sodium chloride (common salt) addition is varied. If sweetness is to be varied, the amount of saccharides such as sugar is to be increased or decreased. For increasing or decreasing sourness, addition of vinegar, etc. is changed. For varying Umami, a typical example of which is created by monosodium glutamate (MSG), MSG addition is decreased or increased in quantity. The concept of "Umami" (Römpp Lexikon Lebensmittelchemie, Georg Thieme Verlag, Stuttgart, New York, 1995, page 883) as a fifth basic taste in addition to sweetness, sourness, bitterness and saltiness was introduced by Japanese scientists in order to describe the taste-improving effect of MSG, monoammonium glutamate (MAG), monopotassium glutamate (MPG) and 5' nucleotides like inosine 5'-monophosphate (IMP). By adjusting the amount of addition of substances that contribute respectively to saltiness, sweetness, sourness, or Umami, the taste has been improved. Although there is a method of improving the taste by synergistically improving Umami taste by simultaneous addition of sodium glutamate, an Umami substance, and sodium inosinate, another Umami substance, all of such methods merely improve the tastes by varying the addition amounts. On the other hand, when one looks at foodstuffs developed for special purposes such as the salt-restrictive diet for hypertensive people, potassium chloride is often used as an alternative for sodium chloride at the expense of its delicious saltiness merely because the former has a certain degree of saltiness. The same is true of diet food from which saccharides is been removed. These phenomena of easily substituting the traditional deliciousness of saltiness, sweetness, sourness or Umami taste with other substances speak of the limitations of the prior art taste-improving technology.

In the prior art, there have been developed food additives with taste-improving properties such as Trehalose (Japanese Patent Laid Open 2000-159788) and yeast extract (Japanese Patent Laid Open 2000-37170). These additives are purported to soften the qualities of tastes such as pungency, bitterness,astringency, sweetness, etc., and to mellow the tastes of foodstuffs. These prior art taste-improving additives are mainly those that improve the quality of sweetness. However, these additives have inherent tastes of their own and impart such tastes to the foodstuffs when added thereto. Food additives which function to improve the tastes such as yeast extract and organic sodium chloride like gluconic acid (Japanese Patent Laid Open 2000-175651) are not necessarily preferable for the Japanese whose sodium intake is traditionally high due to their favourite seasonings of Miso-soybean paste and soy sauce, or for the hypertensive or diabetic people for whom sodium intake is restricted. Thus, the conventional additives with taste-improving properties are limited in use.

Surprisingly, it is not known that more than 90% of the taste-improving substances contained in our daily foods are neutral salts consisting of acids and base (mostly sodium chloride), and that there are only several kinds of pure single substances, namely free acids, sweet or bitter substances. The threshold values of neutral salts (a typical example of which is NaCl) and free acids are in the order of 10⁻³M, and only a handful of sweet or bitter substances have the thresholds below the said value. For instance, the threshold value for brucine is in the order of 10⁻⁶M and that for saccharine is in the order of 10⁻⁷M, indicating their taste-improving properties are quite potent.

That the thresholds of most tastes (most of which are neutral salts) are within the region of 10⁻³M has a significant meaning in chemical terms. In other words, 10⁻³M means the border region between the lean solution (in which composite ions in molecules can move freely) and the dense solution. In other words, most of the taste-improving substances are in the state where diverse and varied collective bodies of ions are discretely gathered in a congested state on the taste receptors in taste cells, and they are not in the state where each molecule is clearly reacting with another molecule as in ordinary chemical reaction.

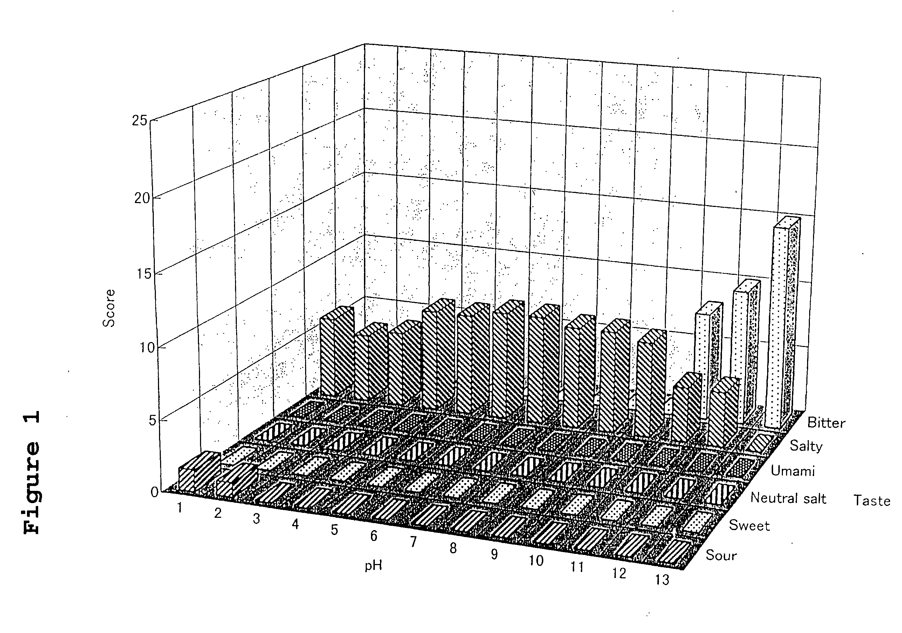

The inventor therefore varied the volume ratios of anions and cations of a representative neutral salt in a dense solution and compared the changes in pH and taste in each region. As for NaCl, it developed saltiness in the wide range from pH2 to pH12 as shown in Fig. 1 (Figure 1 indicates a bar graph showing the taste behaviour of NaCl accompanying changes in pH and concentration (120 mM)), and yet the intensity of saltiness hardly changed. Only in the alkaline region beyond pH11, slight bitterness was felt. This potent buffer function of NaCl must be acting to preserve the biological environment within the living body.

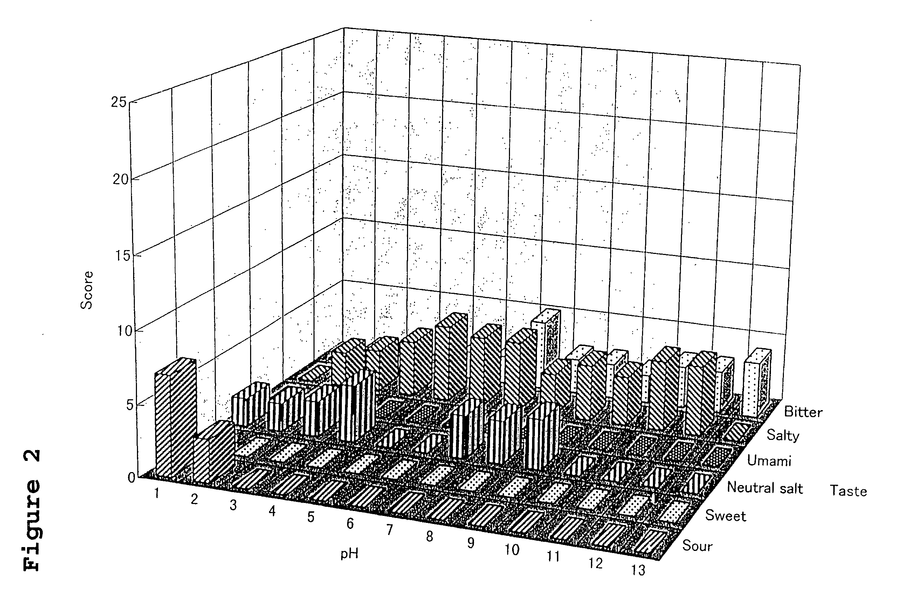

On the other hand, KCl, which has almost the same properties as NaCl in chemical terms, is very much different from NaCl in terms of this taste-improving property. As in the case of NaCl, it develops saltiness in substantially all the regions of pH as shown in Fig. 2 (Figure 2 indicates a bar graph showing the taste behaviour of KCl accompanying changes in pH and concentration (120 mM)). However, it develops bitterness also in the alkaline region. It also presents a taste peculiar to neutral salt ranging extensively from the neutral to the acid regions. This taste is clearly different from Umami and is not at all pleasant, and its intensity is about the same as saltiness or exceeds the same in some cases. Thus, the taste property of KCl shows a clearly different pattern from NaCl.

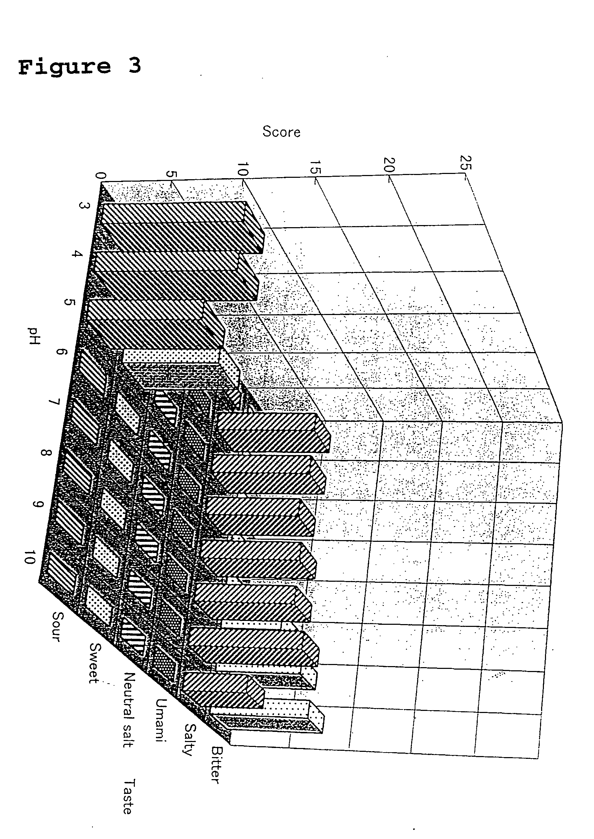

As shown in Fig. 3 (Figure 3 indicates a bar graph showing the taste behaviour of sodium acetate accompanying changes in pH and concentration (480 mM)), acetic acid soda also presents a different taste depending an its pH values as in the case of KCl, and its taste is not uniform.

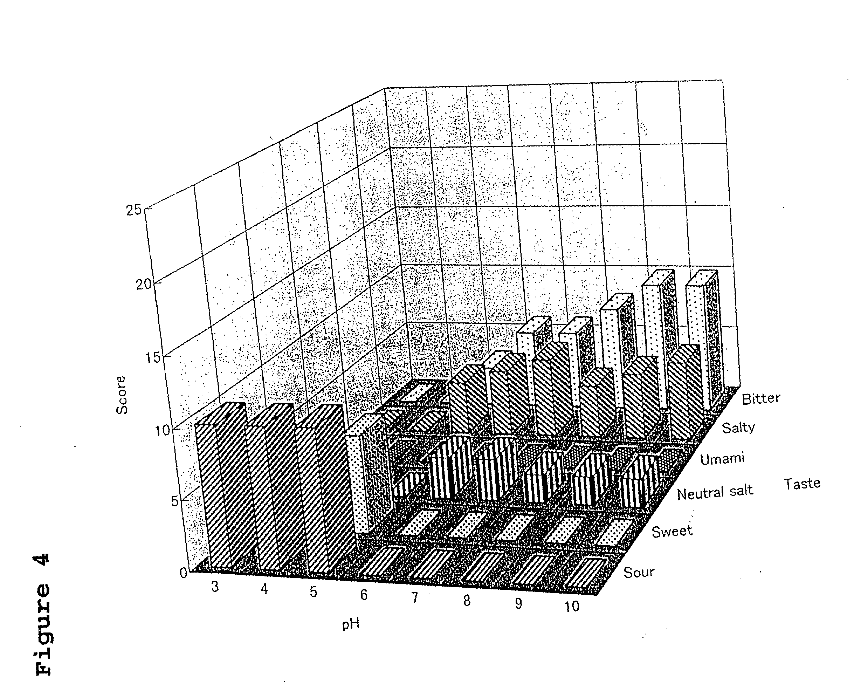

Sodium citrate also demonstrates a complex taste behaviour. The inventor noted that its taste pattern was distinctly divided into two in the neutral regions of pH5 and pH6 as shown in Fig. 4 (Figure 4 indicates a bar graph showing the taste behaviour of sodium citrate accompanying changes in pH and concentration (480 mM)). Based on this fact, the inventor discovered "the taste relaxing agent" as described in further details below.

The inventor believes that this most complex taste presenting behaviour of neutral salts can be explained fully by considering it as a collective body of three patterns. In other words, the major characteristic of neutral salt that develops Umami, a typical example of which is MSG, is that they do not manifest pleasant taste if used alone, but that they do present pleasant taste only when mixed with NaCl. This effect is defined as the "miscibility" with NaCl.

On the other hand, the neutral salt such as acetic acid soda which does not necessarily have pleasant taste may be mixed with NaCl or other neutral salt in order to expand its taste width to include sweetness or bitterness. These tastes are summed as "mixed tastes".

Among the neutral salts, some substances have no distinct flavour of their own but develop their latent character as the neutral salt when mixed with common salt, etc. The inventor named this effect as "the taste-improving property". In the western world, many cite "beef bouillon" as a typical example of delicious food, but beef bouillon itself has no taste of its own. Only with addition of a small amount of NaCl or some other seasoning, it develops an exquisite taste. Thus, it may be said that while the Japanese developed Umami based on its affinity with NaCl and described it as an ideal taste, the westerners consider "the taste-improving effect" of beef bouillon as an ideal taste.

Improving the taste of foodstuff by merely increasing or decreasing the addition amount of a taste-improving agent leads, for instance, to excessive intake of sodium chloride for those who like saltiness, leading to the onset of hypertension. For those who like sweetness, it leads to excessive sugar intake, causing obesity or adult-onset disorders. Mere substitution such as using potassium chloride in place of sodium chloride as in the case of low salt soy sauce will deprive deliciousness inherent to the foodstuff and decrease appetite and pleasure of dietary life.

Additives with conventional taste-improving properties are defective in that the taste of the additive itself will be added to the inherent taste of the foodstuff. It is therefore necessary to determine the amount of addition by considering both the taste of the prior art additive itself and the inherent taste of the foodstuff. As for additives having the taste-improving property such as yeast extract and organic acid containing Na such as gluconic acid, they are not desirable additives for the Japanese whose sodium intake is traditionally high as they partake Miso-soybean paste or soy sauce in great quantities. In recent years, health consciousness of the consumers prompted the demand for low-salt Miso or soy sauce products. But currently available products of this type are tasteless because of decreased sodium chloride content or have unpleasant taste of potassium chloride. The present invention thus aims to develop health-oriented taste-improving agents, which do not contain sodium salt.

It is believed that beef bouillon consists mainly of a mixture of peptide that has seeped into the aqueous solution as its protein has been partially hydrolysed. The present inventor has studied tasteless neutral salts, because he has suspected that it is most probably a relaxing agent. As a result, the inventor found that the mixture of neutral salts, ornithyl taurine and glutaric acid, was "tasteless". However, there are a myriad of problems to be overcome before these novel peptide derivatives can be produced on a practical scale such as clearing the safety tests and achieving the reasonable manufacture costs. As the next best measure, the inventor attempted retrieval of neutral salts which are practically tasteless from among the products approved by the Japanese Government as the food additives. The selected base is a neutral salt formed by citric acid and basic amino acid such as arginine, lysine or ornithine. The reason for the choice of citric acid is that the taste pattern of citric acid reversed at pH6 as discussed above. As a result, the inventor succeeded in obtaining a series of "taste-improving agents" and named them *Arcite, Lyscike and Orcite.* Salt of citric acid of arginine was named *Arcite,* that of lysine *Lyscite,* and that of ornithine *Orcite.*

The present invention uses commercially available basic amino acids and organic acids as ingredients, which are mere neutral salts. They function as basic amino acid and organic acid in the living body, and therefore they present no problems whatsoever regarding safety or similar problems. It should be emphasized that this property is the most remarkable characteristic of the present invention. The use of all the ingredients of the taste-improving agents according to the present invention has been approved by the Government as food additives except orthinine and they are widely used in the food industry. Thus, taste-improving agents according to the present invention are most practical and can be used readily in many of sodium chloride restricted foodstuffs and help to overcome the taste problems. The agents can be used in any form of foodstuffs ranging from liquid, paste, solid to powder forms in the extensive area from general purposes food to special foodstuffs for use in restrictive diets. Because of the fact that the taste-improving agents themselves have no taste, their taste-improving effects can be exerted in any types of flavours and tastes.

Any type of foodstuffs may be used so long as the taste-improving agent according to the present invention can be added. Such foodstuffs include various seasonings such as soy sauce in liquid or powder form, Miso-soybean paste in paste or powder form, table salt, pepper salt, powdered egg yolk, unrefined soy sauce, fish soy sauce, -mayonnaise, salad dressings, vinegar in liquid or powder form, seasoned vinegar, seasonings for Chinese dishes, dip sauces for fried seafood and noodles, Worcester sauce, ketchup, barbecue sauce, curry roux, base for stews, powdered or cubed soups, bouillon base, sweet sake seasoning; table sugar, coffee sugar; various Japanese sweets made of rice, red beans, sugar, etc.; various Western sweets made of flour, butter, sugar, etc.; ice cream and sherbet; fruits in syrup; syrups, various pastes made of fruits, sesame, starch, seafood, and nuts; processed fruits and vegetables such as jams, marmalade, sugared fruits, various types and flavours of pickles; fish and seafood products such as fish sausages, fish pastes; tidbits for sake and alcohol drinks, cooked seafood, fishes, vegetables, etc; dairy products such as milk, yoghurt, cheese, whey, cream, butter, margarine, etc; bottled and canned fish, meat, fruits and vegetables, sake, spirits, wine, brandy, whiskey, vodka, synthetic alcohol drinks, brewed beverages, fruit wine, medicinal wine; green tea, black tea, coffee, cocoa; soft drinks such as juices, carbonated drinks and yoghurt drinks, pre-mix powders for puddings, pan cakes, etc.; powdered juices, coffee, red bean drinks and soups, various soy bean products such as tofu, etc.; frozen foods and retort pouched foods; nuts such as peanuts, almond; lecithin, processed potatoes and fishes; various noodles and pastas, cereals; royal jelly; powdered foods such as bouillons, fish powders, blood powders, bone powders; honey, paprika, cinnamon, nutmeg, pepper, herbs, sage, peppermints, Japanese horseradish, garlic, mustard, Japanese pepper, laurel; seasonings containing one or more citrus extracts; extracts such as yeast extract, propolis extract, medicinal carrot extract, snap turtle extract, vegetable extract, oyster extract, bonito extract, meat extract, seaweed extract, chicken extract, beef extract, mushroom extract, licorice extract, stevia extract, chlorella extract, and aloe extract, and their enzyme processed products; colourings containing one or more colours extracted from madder, annatto, turmeric, red beet, safflower, gardenia, saffron, and red koji; low-salt soy sauce, Miso soy paste and bouillons; low-sugar jam and drinks; low-calorie foods, diet foods, dietary supplements such as Vitamin C, calcium, irons, dietary functional foods, and special purpose foods such as low-sodium foods; and those for elderly people.

Pharmaceuticals to which the taste-improving agent according to the present invention can be added include those with intense bitterness or sourness such as Chinese and Japanese indigenous drugs such as swertia herb, and pyrines. The taste-improving agent according to the present invention consists mainly of neutral salts, and therefore they hardly react directly with pharmaceuticals to prevent the pharmacological effect or cause degeneration. It mainly acts on taste receptors of humans and relaxes unpleasant tastes such as bitterness and sourness of pharmaceuticals.

Regarding the issue of meals and health, the biggest concern today is the excessive sodium chloride intake. Average daily intake of sodium chloride for a Japanese is about 12 g, and although every effort is being made to reduce it to below 10 g to prevent hypertension, it has not succeeded yet. If the taste-improving agents discovered by the present inventor were used, it will become possible for people to enjoy sodium chloride restrictive diets, which maintain the original delicious taste of foods, thereby contributing greatly to improving the health of people.

It is well-known that neutral salts are being used as a buffer material to preserve environment in the human body, and the role of NaCl as a potent buffer is significant. Among neutral salts, several acids are functioning, but among bases, only Na ions are functioning. This is assumedly because most of biological reactions are dependent an proteins, and metabolites consist of decomposition products derived thereof. Because harmful metabolites have the basic group, Na must have been chosen because of its potent buffer actionfor treating them. However, removal of Na ions is difficult because of its intense decomposition property.

In this context, it must be considered the fact that basic materials other than Na such as guanid base of arginine can be used for removal of these basic harmful substances. Since guanido radicals are easily converted to urea and excreted from the living body, "pharmacological effects" of *Arcite* is potential. It is another potential for *Arcite.* Basic amino acids and organic acids used in preparing the taste-improving agent according to the present invention are all decomposed in the living body and their excessive intake do not give any adverse effects to the body.

Arginine which comprises *Arcite* has the hypotensive action accompanying vasodilatation activities, improving circulation, improving arteriosclerosis, activating urea cycle, improving immune functions, lowering ammonia, and acting to stimulate insulin gulkagopin secretion. Lysine which constitutes *Lyscite* is pharmacologically effective in promoting calcium absorption and aspirin dissolution, and is therefore used in pharmaceuticals. As for ornithine that constitutes *Orcite,* it is the intermediate metabolite of arginine in the urea cycle, and is expected to develop the efficacy that is substantially the same as arginine. Organic acids such as citric acid are said to be effective for recovery from fatigue by activation of TCA cycle.

### Example 1 (Preparing the taste-improving agent)

Commercially available basic amino acids are usually sold as salts of hydrochloride. In order to prepare the taste-improving agents according to the present invention, it is necessary to remove anions from the basic amino acids. 0.1 mol of basic amino acid hydrochloride (hydrochlorides of arginine, lysine and ornithine) is dissolved in water, adsorbed on 1000 ml of weak acid ion exchange resin, Amberlite IR-120 H+ type, (exchange volume x 5 times or more), and washed in water.

Free amino acids can be obtained in crystal forms if dried sufficiently. This step may be eliminated if commercially available free amino acid of 95% yield is used.

### Example 2 (Preparing taste-improving agents)

One to 3 equivalent weight of citric acid and 1 to 3 equivalent weight of basic amino acid are mixed at an arbitrary ratio to form the neutral salt.

The preparation of the salt is discussed in the following. Basic amino acid and citric acid are added to a small amount of water and dissolved completely. To the resultant mixture water and ethanol (or ethanol) is added to cause deposition of neutral salt. In many cases, the deposit is in an oily form, but it can be made into hygroscopic deposits by sufficiently drying. The yield was 80 - 100%.

The tastes of *Arcite, Lyscite, Orcite,* and their related substances are discussed in the following. Free arginine in its original form is not palatable, and its hydrochlorides are bitter. Lysine and ornithine have the pungent taste due to the base in their free form, but their hydrochlorides are respectively tasteless. However, dense solutions (more than 10⁻² M) are bitter. Neutral salts with citric acid, *Arcite* and *Orcite*, are substantially tasteless in the neutral region (pH 5.5 - 6.5). The taste quality is in the order of *Orcite>Lyscite>Arcite*.

### Example 3

*Arcite* of Example 2 was added at the ratio of 1 ∼ 5.0% to bitter herb candies and full bodied milk candies, and the panel of 5 men and 5 women were asked to compare them with those not added *Arcite* for evaluation. Tables 1 and 2 show the results of the taste scores (scale of five; 1 to 5). The panel was also asked to vote for the candy that appealed to them more. As for sweetness, some tendency of enhanced sweetness was observed and the changes in quality were also investigated. These results show that addition of *Arcite* of Example 2 improved the bitterness of herb candies and the after-taste of sweetness of milk candies, imparting mildness to the tastes (Table 3). *Arcite* addition enabled offering of candies with better appeal to the consumers.

**Table 1**

| Herb candy | | | | | | | |
|---|---|---|---|---|---|---|---|
| *Arcite* | Sweetness | Saltiness | Sourness | Bitterness | Umami | Aftertaste of sweetness | Body |
| Not added | 25 | 5 | 10 | 16 | 12 | 10 | 13 |
| Added | 27 | 10 | 8 | 12 | 18 | 21 | 10 |

**Table 2**

| Milk candy | | | | | | | |
|---|---|---|---|---|---|---|---|
| *Arcite* | Sweetness | Saltiness | Sourness | Bitterness | Umami | Aftertaste of sweetness | Body |
| Not added | 32 | 8 | 3 | 0 | 18 | 7 | 26 |
| Added | 35 | 14 | 2 | 0 | 24 | 18 | 16 |

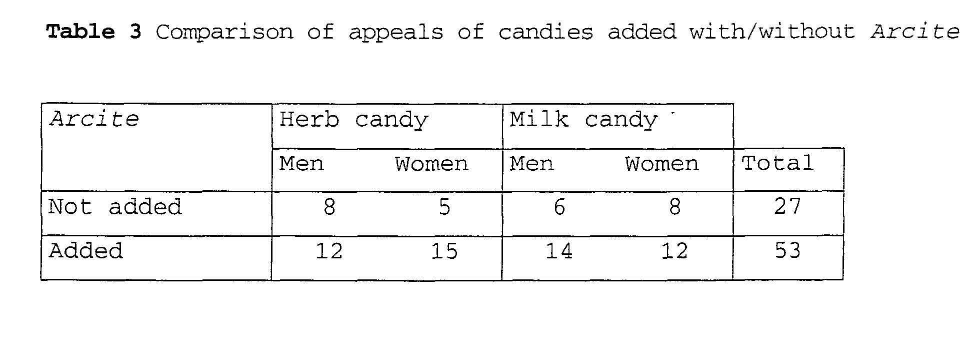

### Example 4

*Orcite* of Example 2 was added at the ratio of 1 ∼ 5.0% to a sports drink, and the panel of 5 men and 5 women was asked to compare the product with that not added with *Orcite.* Table 4 shows the result of taste scores (scale of five; 1 to 5). The panel was also asked to evaluate which of the sports drinks added or not added with *Orcite* appealed to their taste (Table 5 shows the result). Sweetness of the drink was observed to enhance as in the case of candies, and the qualitative changes were evaluated. As a result, the sports drink added with *Orcite* of Example 2 was found to have the clear-cut aftertaste. *Orcite* addition enabled offering of drinks with more appeal to the consumer taste.

**Table 4**

| Sports drinks | | | | | | |
|---|---|---|---|---|---|---|
| *Orcite* | Sweetness | Saltiness | Sourness | Bitterness | Aftertaste of sweetness | Body |
| Not added | 25 | 5 | 10 | 5 | 10 | 13 |
| Added | 27 | 8 | 8 | 0 | 15 | 10 |

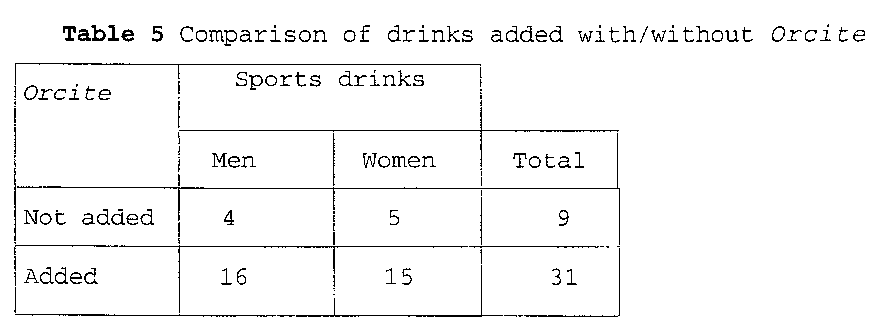

### Example 5

*Lyscite* of Example 2 was added at the ratio of 1 ∼ 5% to the commercial low-salt soy sauce, and the panel of 5 men and 5 women was asked to compare the samples added with or without *Lyscite.*

Table 6 shows the result of the taste scores (scale of five; 1 to 5). Addition of *Lyscite* of Example 2 radically enhanced saltiness and Umami of the low salt soy sauce. This enabled offering of healthier and more delicious low salt soy sauce without using sodium chloride or potassium chloride.

**Table 6**

| Commercial low-salt soy sauce | | | | | | |
|---|---|---|---|---|---|---|
| *Lyscite* | Sweetness | Saltiness | Sourness | Bitterness | Umami | Body |
| Not Added | 5 | 20 | 10 | 16 | 27 | 13 |
| Added | 5 | 28 | 8 | 12 | 36 | 12 |

### Example 6

*Arcite* of Example 2 was added at the ratio of 1 ∼ 5% to ketchup, mayonnaise and Worcester sauce, and the panel of 5 men and 5 women was asked to compare the taste of the samples added or not added with *Arcite.* Tables 7, 8 and 9 show the tabulation results of the taste scores (scale of five; 1 to 5). *Arcite* addition to thick pastes, emulsions or extracts of various ingredients enhanced the taste, mainly saltiness and Umami. In these samples, trace degree of hot taste became pronounced.

**Table 7**

| Ketchup | | | | | | | |
|---|---|---|---|---|---|---|---|
| *Arcite* | Sweetness | Saltiness | Sourness | Bitterness | Umami | Hotness | Body |
| Not added | 10 | 20 | 15 | 4 | 17 | 22 | 16 |
| Added | 12 | 26 | 8 | 4 | 23 | 27 | 13 |

**Table 8**

| Mayonnaise | | | | | | | |
|---|---|---|---|---|---|---|---|
| *Arcite* | Sweetness | Saltiness | Sourness | Bitterness | Umami | Hotness | Body |
| Not Added | 5 | 15 | 18 | 3 | 14 | 20 | 15 |
| Added | 7 | 19 | 8 | 2 | 22 | 24 | 12 |

**Table 9**

| Worcester sauce | | | | | | | |
|---|---|---|---|---|---|---|---|
| *Arcite* | Sweetness | Saltiness | Sourness | Bitterness | Umami | Hotness | Body |
| Not Added | 5 | 15 | 9 | 1 | 27 | 27 | 28 |
| Added | 5 | 19 | 8 | 1 | 36 | 34 | 27 |

### Example 7

Powdered *Arcite* of Example 2 was added at the ratio of 1 ∼ 50% to commercially available table salt, and the panel of 5 men and 5 women was asked to taste the samples and compare them with those not added with *Arcite.* Table 10 shows the tabulation results of the taste scores (scale of five; 1 to 5). Addition of *Arcite* of example 2 radically enhanced saltiness of the table salt. Unpleasant sourness or bitterness was not observed. Addition of *Arcite* to conventional table salt largely decreased the amount of sodium use.

**Table 10**

| Table salt | | | |
|---|---|---|---|
| *Arcite* | Saltiness | Sourness | Bitterness |
| Not added | 20 | 0 | 0 |
| Added | 46 | 0 | 0 |

## Claims

1. Taste-improving agent mainly comprising neutral salts formed by reacting a basic amino acid and citric acid.

2. Taste-improving agent as claimed in claim 1 **characterized in that** the basic amino acid is arginine or lysine or ornithine.

3. Taste-improving agent **characterized in that** the mixture of two or more neutral salts as claimed in claims 1 and 2 is used.

4. Pharmaceutical containing the taste-improving agent as claimed in claims 1, 2 and 3.

5. Foodstuff containing the taste-improving agent as claimed in claims 1, 2 and 3.
